# EUROPEAN PATENT APPLICATION

(11) **EP 4 667 541 A1**
(43) Date of publication of application: **24.12.2025**
(21) Application number: 24183140.3
(22) Date of filing: 19.06.2024
(51) Int. Cl.: C09D 11/101, C08K 3/04

(54) **UNIVERSALLY APPLICABLE PRINTING INK**

(71) Applicant: HELIOSONIC GmbH, 46483 Wesel (DE)
(72) Inventor: The designation of the inventor has not yet been filed
(74) Representative: Kleine, Hubertus

(57) **Abstract**

The invention relates to a liquid printing ink comprising,
i) a liquid,
ii) 0.02 - 0.90 wt.% carbon containing particles X dispersed or dissolved in the liquid, where said carbon containing particles X are present as carbon nanotube particles, graphite particles and/or structural analogue particles of graphite selected from the group consisting of graphene particles, graphene oxide particles, graphite oxide particles, fullerene particles and particles of graphite intercalation compounds and
iii) polymer dissolved in the liquid having a weight average (Mw) molecular weight of at least 250 000 g/mol, where the weight average (Mw) of the molecular weight of the dissolved polymer is determined according to DIN 55672-2: 2016-3, where at least a partial quantity of the polymer contains structural units of a meth acrylate.

## Description

The present invention relates to a liquid printing ink, a printing process, a printing assembly, the use of the liquid printing ink and a so printed substrate.

It is often desired to paint or to print on curved surfaces of objects (e. g. on curved automotive surfaces) and/ or on coarsely structured surface areas of substrates.

In case special printing machines are not available simple spray painting in which the substrate is masked off might provide sufficient results. For this purpose, masking tapes for spray painting are used. Where curved edges and three-dimensional surfaces need to be masked, special fineline tapes with a very level of high conformability might be used.

However, often it is difficult to provide such masking tapes which offer good adhesion on relevant substrates on the one hand which can be removed afterwards without leaving any adhesive residues on the other hand. Furthermore, masking of the substrate, e.g. providing the frame of letters on an automotive part, is time consuming and cannot be deemed as to be time efficient. An additional drawback of this method is the non-optimal degree of application efficiency, so that part of the sprayed paint, known as overspray, does not land on the substrate part to be painted but on the masking material.

Thus, often complex printing apparatuses for ink jet printing on curved surfaces of objects are used in order to increase the efficiency. Such apparatuses typically comprise an inkjet printhead having a plurality of nozzles, and there are also such being operative to effect relative movement of the nozzles and the substrate.

US 10,150,304 B proposes such a machine type for painting vehicle parts with a paint. Said machine type comprises an application device that applies the coating agent, wherein the application device includes a print head that discharges the coating agent from a plurality of coating agent nozzles included on the print head.

However this complicated machine is not optimal concerning the flexibility of use and efficiency because coating nozzles are needed. The use of coating nozzles generally mean limitations concerning the rheology and the ingredients of the used paint. Generally, it is difficult to print paints of high viscosity or bigger particle containing paints through nozzles. Furthermore, ink nozzles easily become blocked and in case of the change of the ink the nozzles have to be cleaned. This further limits the universal and practical use of such a machine.

A type of printing process which avoids the use of such ink nozzles is known as so-called lift printing process.

US 11,458,755 deals with such a lift printing technology using an ink printing apparatus which is working as nozzle-less droplet ejector for ejecting droplets of ink from the ink layer. In such a process a problem might be that the laser-induced ejection (drop flight) of the particles may be accompanied by emission of numerous disruptive satellites which deteriorates the quality of the printing result.

WO 2021047886 proposes to use reflective particles instead of carbon black (absorption) particles in a corresponding (lift technology) printing process. Such (appropriate) reflective particles have also absorbing properties in respect to the laser beam. In contrast to the typical carbon black absorbing particles these reflective (absorbing) particles may be more neutral for the coloured impression conveyed by the ink layer. Such reflective (absorbing) particles are typically of metal or of a metal-coated carrier material. However, these reflective particles have to be added in relative hight amounts (typically an amount of 1 - 10 wt.% to the ink that is used for the ink layer) in order to generate a sufficient (laser beam) absorbing effect. This generally causes a considerable loss of the transparency of the ink. Furthermore, such reflective particles typically generate a metallic sheen and/or a gray haze. This limits the suitability of this type of printing technology for many applications, especially for those where a high turbidity (and/or a gloss) is undesirable (e. g. for clear coats).

According to the other relevant aspect discussed above, such lift printing processes which avoid the use of such ink nozzles are generally not considered suitable for quality printing on curved surfaces or coarsely structured substrates. However, WO 2022/002534 concerns the printing of curved surfaces, in which a printing machine is used that has a nozzle-free, three-dimensionally movable print head. On the one hand, such a printing machine is quite complex to purchase due to the forced three-dimensional movability of the print head (economical effort), and on the other hand, the regular three-dimensional alignment is quite time-consuming, which delays the printing process in terms of speed.

The problem addressed by the present invention is therefore to provide an universally applicable (lift) printing technology with which sufficient high print qualities can be achieved.

The object of the invention is a liquid printing ink comprising,
i) a liquid,
ii) 0.02 - 0.90 wt.% carbon containing particles X dispersed or dissolved in the liquid, where said carbon containing particles X are present as carbon nanotube particles, graphite particles and/or structural analogue particles of graphite selected from the group consisting of graphene particles, graphene oxide particles, graphite oxide particles, fullerene particles and particles of graphite intercalation compounds and
iii) polymer dissolved in the liquid having a weight average (Mw) molecular weight of at least 250 000 g/mol, where the weight average (Mw) of the molecular weight of the dissolved polymer is determined according to DIN 55672-2: 2016-3, where at least a partial quantity of the polymer contains structural units of a meth acrylate.

The dissolved polymer having a weight average (Mw) molecular weight of at least 250 000 g/mol (where the weight average (Mw) of the molecular weight of the dissolved polymer is determined according to DIN 55672-2: 2016-3) includes all polymer dissolved in the liquid (in the printing ink).

Said polymer containing structural units of a meth acrylate might be provided by polymers only containing structural units of meth acrylate, like a methacrylate homopolymer and/ or by copolymers containing structural units of a meth acrylate and different structural units (especially of other polymerizable monomers, e. g. styrene).

The liquid printing ink according to the present invention enables an universal high quality lift printing (the transfer mechanism of the ink according to a lift printing process).

This universality is based in particular on its applicability for distance printing (especially for printing on curved surfaces or rough substrates) and the possibility of being able to print practically unclouded ink in an economical way using a lift process.

Ultimately, the absorption particles provided according to the invention ensure that a high absorption performance can still be achieved without causing any significant clouding of the ink: such a high degree of absorption efficiency generally means not only energy efficiency, but also has a direct effect on an attractive appearance of the printed result. This is particularly relevant in connection with chromatic printing, light printing, transparent printing and glossy printing, since undesirable haze can be avoided.

It is an economic advantage that only small dosages of said absorption particles were needed for the lift of the printing ink.

This is in contrast to known - lift technology used - absorption particles, such as carbon black or metallic particles which are also not substantially neutral for the coloured impression conveyed by the ink layer.

The special small range of 0.02 - 0.90 wt.% carbon containing particles X dispersed in the liquid guarantees on the one hand a sufficient (laser) absorption but on the other hand avoids undesirable haze. Generally, it is advantageous (also energy efficient) to reduce the used laser power (if possible).

The explained use of the absorption particles (not amorphous allotropes in particularly low concentrations) thus not only prevents turbidity, but also allows the production of inks with particularly low viscosity, so that "viscosity provision capacity" is created for the addition of polymers with a high molecular weight - in other words, if the absorption particles contribute to less viscosity, polymer with a higher molecule might be used (by maintaining a limited viscosity).

Normally, particles X with a relatively small size (about < 5 µm) and a relatively small size distribution were used.

In case transparency is not needed, larger particles X with a broader particle size distribution can also be used.

According to a preferred embodiment the printing ink contains 0.02 - 0.40, preferably 0.02 - 0.25 wt.% of the carbon containing particles X dispersed or dissolved in the liquid.

Preferably, the liquid printing ink contains 10 - 99 wt.%, preferably 15 - 95 wt.%, more preferably 50 - 90 wt.% of the liquid.

Preferably, at least 50 wt.% of the particles X dispersed and/ or dissolved in the liquid are present as graphite particles and/or graphene particles. This means for example that the corresponding amount of carbon nanotubes particles is limited accordingly: carbon nanotubes generally provide an intensive thickening effect (stronger than the thickening effect of graphene and graphite) so that the corresponding limitation of the carbon nanotubes amount contributes concerning a limited viscosity of the ink. An ink with a limited viscosity is generally better to print. According to the invention it is also possible to use corresponding mixtures of carbon nanotube particles, graphite particles and/or graphene particles.

Typically, the liquid contains or consists of organic solvents.

The liquid might contain free radical polymerizable organic solvents (reactive thinners).

According to a special embodiment the printing ink contains pigments.

Preferably, the liquid printing ink contains less than 0.4 wt.% carbon black, preferably no carbon black.

According to a special embodiment the liquid ink contains 0.1 - 80.0 wt.%, preferably 1.0 - 20.0 wt. % non-carbon particles with a diameter of 3 - 300 micrometer (measured by laser diffraction, according to DIN ISO 13220, edition 2020), preferably present as pigment particles.

Such large particles cannot be printed by conventional jetting (nozzles would block) but by the lift printing technology according to the present invention.

Especially, in connection with the use in distance printing (e. g. applied for lift-printing on curved sections of substrates - described below) the used soluble (dissolved) polymer is of high importance:
According to a preferred embodiment, the dissolved polymer has a weight average (Mw) molecular weight of 250 000 g/mol to 6 000 000 g/mol, more preferably of 400 000 g/mol to 3 000 000 g/mol.

The use of such suable polymers with high molecular weights seems to be a condition for the use in lift-distance-printing (if a sufficient printing quality should be maintained).

Preferably, the concentration of the dissolved polymer is 0.05 to 2.00 weight%, more preferably 0.10 to 1.00 weight%.

Preferably, at least 50 wt.% of the dissolved polymer is contributed by structural units of meth acrylates (e. g. copolymer containing mainly meth acrylate structural units but additionally also some different structural units).

According to a preferred embodiment, at least 50 wt.% of the dissolved polymer is contributed by a meth acrylate (e. g. by a meth acrylate homopolymer).

According to a special preferred embodiment, at least 50 wt.% of the dissolved polymer is contributed by methyl meth acrylate.

The invention is also directed to a printing process for printing a substrate by using an ink printing assembly with a movable print head comprising an ink carrier having an ink layer, the ink layer being irradiated regionally in such a way that heat bulges are formed in the ink layer which cause the splitting of ink droplets so that the ink printing assembly is working as nozzle-less droplet ejector for ejecting droplets of ink from the ink layer, the distance between the print head and the substrate is adjusted by moving the print head relative to the substrate, wherein the ink layer contains or consists of a liquid printing ink as described above.

Nozzle-less droplet ejection means that no ink nozzles are used according to the relevant printing mechanism.

The printing process according to the present invention allows to paint or to print with sufficient sharp edges on curved surfaces of objects or on structured surface areas

It is not necessary that the relevant substrates are masked off before printing so that the efficiency is increased.

Additional advantage is caused because the printing process according to the present invention avoids the use of printing nozzles. Working nozzleless means to increase the flexibility and the universality of the printing process because e.g. it is possible to print also paints of high viscosity or bigger particle containing paints. Relevant nozzleless printing makes it also easier to change to color of the printed ink.

Additionally, it should be said that formation of satellites around the transferred drop of ink can be avoided sufficiently.

Because in the process no nozzles were used, there is no resolution limitation caused by nozzles. Thus, inks with high viscosity and large particles can be printed with high print resolution.

The relevant printing quality is also characterized by a low "satellite generating rate" (splashes outside the printed image): The satellite generating rate is determined via microscopical satellite counting (counting number of splashes).

It should be pointed out that the printing process according to the present invention allows printing with sufficient sharp edges on curved substrates or on structured surface areas even if no three dimensional movable print head is used.

Preferably, the distance between the print head and the substrate is adjusted by providing the print head with exactly two degrees of freedom in translation, allowing horizontal (Tx), and vertical (Tg) translations.

The larger printing distance provided according to the invention ultimately makes it possible to use such a print head that can "only" be moved in two dimensions while maintaining fairly good print quality. This is particularly worth emphasizing because one generally does not expect print results of good quality at such print distances (in a lift printing process).

Alternatively, it is also possible that the distance between the print head and the substrate is adjusted by providing the print head with three degrees of freedom in translation, allowing horizontal (Tx), vertical (Tg) and in depth (Tz) translations. However, the use of such a three dimensional movable print head might be economically not so attractive, especially regarding the corresponding printing speed.

Typically, the ink layer is heated by means of a laser which regionally heats the ink layer, preferably line by line, through the ink carrier, as a result of which the ink, particularly by virtue of vaporizing constituents, is heated and forms a bulge.

According to a preferred embodiment, the ink layer is irradiated by means of a laser, more particularly by means of a switched laser.

According to one embodiment, the laser generates a grid of dots which forms the printed image. According to another embodiment, the laser runs in lines. Combinations of dots and lines are likewise conceivable.

The ink layer is heated in such a way that the ink particles which form are split off and thrown in the direction of the substrate.

The ink splitting is the process of ink transfer, particularly that in which a drop of ink goes onto the substrate, where it attaches permanently and forms a printed dot or a printed line.

The attachment preferably takes place predominantly, more preferably exclusively, by forces of adhesion between the substrate and the drop of ink that forms.

Also conceivable, however, at least in a supporting function, is to utilize magnetic or electrostatic forces so that the bulge attaches on the substrate and so forms a drop which goes over onto the substrate.

Generally, the ink carrier and ink layer are moved parallel to one another (typically the ink layer lies on a circulating ink ribbon).

Normally, substrate and ink carrier are moved relative to one another at a speed which typically corresponds to about the half of the printing speed.

The printing speed should be defined as to be the number of the scanned printing lines per second, multiplied with the printed line width.

This allows a clean printed image and a high resolution to be achieved.

A switched laser used is normally designed as a laser working with a single light wavelength but providing variability concerning light intensity and switching frequency.

The ink layer can be formed by coating an ink ribbon with an ink. This may be configured in particular with a circulating ribbon which in order to produce an ink layer is guided through an inking unit, more particularly a nip inking unit.

Said ink layer being in contact with the ink carrier might be (stepless) generated with a variable thickness so that the current amount of the ejected ink is adjustable. The thickness of the ink layer (on the ink ribbon) should be normally > 30 µm.

Typically, the current amount of the ejected ink is (stepless) adjustable by variation of the intensity of the irradiation, more particularly by the variation of the laser power.

With the process of the invention it is possible to apply ink layers 1 to 100 µm, preferably 10 to 50 µm, thick to the substrate.

According to a preferred embodiment, the printed substrate contains curved surface sections and/ or structured surface areas, preferably with a profile of 0.1 - 5 mm.

"Distance-lift-printing" allows the printing on such surfaces:
Typically, the print distance between the irradiated ink layer region and the corresponding printed substrate region is temporarily or permanently at least 1100 µm.

Often, the print distance between the irradiated ink layer region and the corresponding printed substrate region is temporarily or permanently at least 1300 µm.

Preferably, the print distance between the irradiated ink layer region and the corresponding printed substrate region is temporarily or permanently at least 1100 - 10 000 µm, preferably 1100 - 4000 µm. Greater print distances would normally deteriorate the print quality. Smaller print distances often make it difficult to print on three-dimensional surfaces.

According to one embodiment, the print distance between the irradiated ink layer region and the corresponding printed substrate region is permanently at least 1100 µm.

In many cases the print distance between the irradiated ink layer region and the corresponding printed substrate region is at least temporarily at least 1500 µm.

The invention also concerns a printing assembly comprising an ink layer containing a liquid printing ink as described above. The invention is also directed to a substrate which is printed with a printing process as described above and the use of an ink as described above or the use of a process as described above which relates to the printing on substrates containing curved surface sections and/ or to the printing on structured surface areas.

Below the invention is further explained by using examples.

### Performed (Lift) printing process:

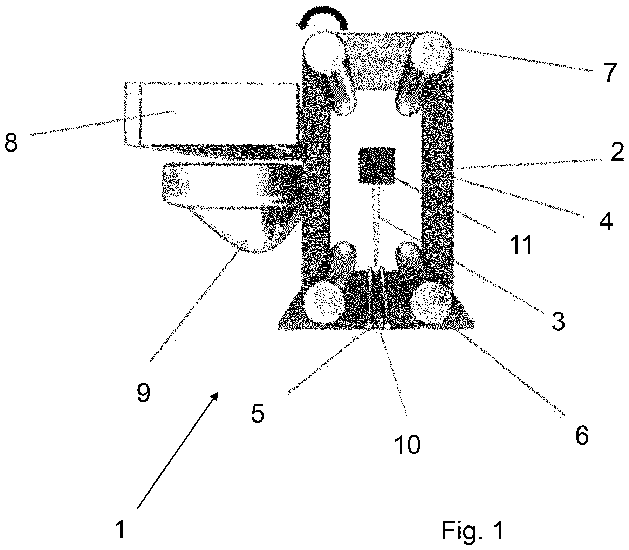

A printing apparatus, according to Fig. 1 was used. Fig. 1 is a schematic view of one exemplary embodiment of a printing machine (1) which might be used to perform the process according to the invention.

The printing machine (printing apparatus) (1) comprises as ink carrier (4) a circulating ink ribbon.

The ink ribbon is coated homogeneously and over its full area with ink (2) by the inking unit (8). The ink ribbon subsequently moves in the arrow direction to the printing nip (10). The ink carrier (4) is distanced by a gap from the substrate (6) to be printed. Preferably the width of the gap is adjustable and/or is regulated continuously. This can be done by means, for example, of adaptable distancing rolls (5).

In the printing nip (10), using a laser scanner (11), a laser beam (3) is focused through the ink carrier (4), which is permeable to the laser light, into the ink (2). The local and targeted heating of parts of the ink (2) by means of the laser beam (3) causes explosive vaporization of a small region of the ink (2), and so a part of the printing ink (2) is transferred from the ink ribbon onto the opposite substrate (6).

The ink ribbon, controlled by the distancing rolls (5) and the deflection rollers (7), subsequently moves back in the direction of the inking unit (8). On contact between inking unit (8) and the ink ribbon, the ink (2) consumed is replenished.

The excess ink (2) in the inking unit (8) is collected in the ink trough (9) at the bottom and is added continuously in repetition to the printing operation.

### List of reference numerals relating to Fig. 1

1. Printing machine (printing apparatus)
2. ink
3. Laser beam
4. ink carrier
5. Distancing roll
6. Substrate
7. Deflection roller
8. Inking unit
9. ink trough
10. Printing nip
11. Laser scanner

A lift printing apparatus/ lift printing process as described above forms the basis for the experiments below:
Printing tests with different additives (PMMA 036/MW1.6 million; PMMA 034/MW 30,000) and distances from print head to substrate were performed. Graphene was used as the absorption pigment. For this purpose, two different PMMA types with different molecular weights were used.

These different inks (with used polymers poly methy methacrylate and cellulose ether each completely dissolved) were then printed with different printhead/substrate distances and the quality/ precision of the print results were evaluated/ compared.

| **Compositions A1); A2)** | **[wt.-%]** |
|---|---|
| Polyester-Tetraacrylate (a liquid) | 60.0 |
| Hexandiol Diacrylate (a liquid) | 33.4 |
| Poly(methyl methacrylate) | 0.2 |
| Dispersing agent | 0.2 |
| Photoinitiator (of the type 1) | 6.0 |
| Graphene (particles) | 0.2 |

| **Compositions B1); B2)** | **[wt.-%]** |
|---|---|
| Polyvinylbutyral (PVB) - (MOWITAL B 20 H) | 6.0 |
| 3-methoxy-3-methyl-butanol (MMB) | 93.4 |
| Cellulose ether | 0.2 |
| Dispersing Agent | 0.2 |
| Graphene (particles) | 0.2 |

***Series of experiments with PMMA (poly methyl methacrylate):***

### A1) PMMA/MW 1.6 million g/mol:

| **Printing distance precision** | **splashes** | **printing** |
|---|---|---|
| 0.3 mm | no | high |
| 1.5 mm | low | still high |
| 2.5 mm | moderate | medium |

### A2) PMMA/MW 30 000 q/mol (not according to the invention)

| **Printing distance precision** | **splashes** | **printing** |
|---|---|---|
| 0.3 mm | low | still high |
| 1.5 mm | strong | medium |
| 2.5 mm | very strong | small |

### As comparative examples series of experiments with cellulose ether (not according to the present invention):

### B1) Cellulose ether /MW 1.15 million g/mol

| **Printing distance precision** | **splashes** | **printing** |
|---|---|---|
| 0.3 mm | no | high |
| 1.5 mm | low | still high |
| 2.5 mm | moderate | medium |

### B2) Cellulose ether /MW 40 000 g/mol (not according to the invention)

| **Printing distance precision** | **splashes** | **printing** |
|---|---|---|
| 0.3 mm | low | high |
| 1.5 mm | strong | medium |
| 2.5 mm | very strong | small |

The experiments above show that quite good (at least usable) print quality can also be maintained when printing with print distances greater than 1100 µm, but only if dissolved polymer with a sufficiently high molecular weight is used. Furthermore, it is shown that the meth acrylate polymer type according to the present invention works very well (comparison with the polar cellulose ether type which is typically used in many lift printing processes).

In all experiments (only) 0.2 wt.% graphene particles were used as absorption particles.

Graphene as absorption particles (however, non-amorphous carbon particles in general) has the decisive advantage that, despite its low concentration (about 0.2 wt.%), it is on the one hand very absorbently active and on the other hand it is only slightly visible in visible light, so it often does not interfere with visual effects.

The turbidity of all of the above inks is very low (disturbing effects in the functional area are minimal or non-existent).

Below, there are some additional experiments which demonstrate the absorbance efficiency of non-amorphous carbon particles (in contrast to other particle types). These experiments were not performed by using polymers with high molecular weights having structural units of a methacrylate (according to the present invention). However, the corresponding demonstration effect should be independent of the used polymer (in case of the use of high molecular polymers the viscosity might increase: this difference might be compensated e. g. by using a "stronger" laser):

### Printing details and printing results:

To evaluate the LASER absorption efficiency, different concentrations of the carbon containing particles were added to a clear coat formulation (0.125 - 2.000 wt.-%) and each sample was printed on a transparent PET foil with a LASER power of 300 W and a printing speed of 2.5 m/min according to the standard LIFT printing process as described above.

In the next step, the coverage of the printed area (10 x 20 cm²) was evaluated visually under a digital light microscope ("Keyence VHX-7000"). The laser absorption and thus the ink transfer was sufficient when no unprinted (non-printed) areas were visible: this is meant with "full cover printing".

In additional pre-tests (simulation tests), the film transparency of the samples, depending on the particle concentration, was evaluated by applying films on a transparent PET foil via a wired K bar hand coater (close wound, 12 µm grooves). In this way it was possible to ensure that all samples have the same film thickness, which is a condition that the corresponding experiments were comparable with each other.

Based on the previous results of the pre-tests, print tests of the samples according to the standard LIFT process (as described above) were carried out, except in the case of aluminum particles, as the transparency was already insufficient at 0.500 wt.-%.

### K bar testing and printing results

Different carbon containing particles (and aluminum particles) have been incorporated into a solvent-based clear coat (dispersion) and applied on a transparent PET foil by the K bar to obtain a film with a thickness of about 6 µm after drying. This simulates the (substrate) result of a corresponding lift printing process according to the present invention (the results are comparable because this method provides the same film thickness). In other words: the film thickness after drying of the samples applied *via* K bar are comparable to printouts obtained by the LIFT process.

The visual result was evaluated: the light transmission of the corresponding films has been evaluated visually (providing a range between 0 and 6), where 0 represents transparent and 6 opaque.

All applied dispersions were prepared by standard dispersing procedures. The quality of the resulting dispersions is in accordance with commercially available standard dispersions.

| **Components of the Dispersion** | **[wt.-%]** |
|---|---|
| Polyvinylbutyrat (PVB), MOWITAL^{®} B 20 H | 6.000 |
| 3-methoxy-3-methyl butanol (MMB) | 90.000 - 94.000 |
| Dispersing agent (DISPERBYK^{®} 111, Phosphoric acid ester for aluminum; and DISPERBYK^{®}2013, polymer with quarternized amino groups for the other particles) | 0.050 - 1.000 |
| Particle (carbon containing particle/ or aluminum) | 0.125 - 2.000 |

The weight percentages in the table above are only approximate (since they do not always add up to 100 exactly); however, at least weight ratios are displayed.

### Special properties of the used particle types

| | **Graphene** | **Graphite** | **CNT** | **Carbon Black** | **aluminum** |
|---|---|---|---|---|---|
| Particle Size D₅₀ [µm] | 5-15 | < 5,5 | | < 1 | 10 |
| Surface Area [m²/g] | 400 - 600 | about 15 | 800 - 1600 | - | - |
| Length [µm] | about 10 | about 5 | >5 | - | - |
| Diameter [nm] | - | - | 1.5 | - | - |

The graphene particles used in the experiments typically consist of 8 - 10 agglomerated ("singled out") layers (only for clarification: said layers are not agglomerated according to chemical graphite structure); The graphite particles used in the experiments (the corresponding layers agglomerated according to the chemical graphite structure) have an edge length of about 5 µm and a flake thickness of about 0.5 µm.

### Optical evaluation of the film based on kind of particle and particle concentration

| **[wt,.%]** | **Graphene** | **Graphite** | **CNT** | **Carbon Black** | **Aluminum** |
|---|---|---|---|---|---|
| 2.000 | 5 | 5 | - | 6 | 6 |
| | Printable | Printable | Printable | Printable | Printable |
| 1.000 | 4 | 4 | - | 6 | 6 |
| | Printable | Printable | Printable | Printable | Printable |
| 0.500 | 2 | 2 | 3 | 4 | 5 |
| | Printable | Printable | Printable | Hardly printable | Printing not tested |
| 0.250 | 1 | 1 | 1 | 1 | 4 |
| | Printable | Printable | Printable | Not printable | Printing not tested |
| 0.125 | 0 | 0 | 0 | 0 | 3 |
| | Printable | printable | printable | Not printable | Printing not tested |

| | | | | | |
|---|---|---|---|---|---|
| 0 = transparent, 6 = opaque | | | | | |

Printable (or not printable) via the Lift-Printing method as described above: "printable" stands for "full-cover printing"; "hardly printable" means that "full-cover printing" is not achieved.

For example, in the case of carbon black, it was even not possible to obtain a full-cover printing at concentrations below 0.500 wt.-%, even not at higher laser radiation power values.

For graphene, graphite and carbon nano tube (CNT) particles, concentrations of (and also below) 0.250 wt.-% were already sufficient even to obtain a full-cover printing with high transparency ("nearly transparent absorbers").

The results shown in the table above demonstrate the high efficiency of graphene, graphite and carbon nano tube particles as transparent (or nearly transparent) absorber materials for the LIFT process. In case said particles are used, a printing according to the present invention is even possible with particle concentrations below 0.250 wt.-%. For example, concentrations of about 0.01 wt.-% graphene particles might be sufficient even to obtain a full-cover printing. However, in case of such low particle concentrations used a corresponding high laser radiation power would be necessary in order to enable the printing process. However, in many cases such a high laser radiation power should be avoided (e. g. because saving of energy).

Particles of non-amorphous carbon particles typically contribute to a high viscosity. Especially, CNT particles (carbo nano tube particles) contribute to high viscosities (often also working as a kind of thickener). Depending on further influence parameters (like the viscosity of a used liquid) in many cases it is advantageous to limit the amount of CNT in order to reduce the thickening effect (an ink with a limited viscosity is normally easier to print).

## Claims

1. A liquid printing ink comprising
i) a liquid,
ii) 0.02 - 0.90 wt.% carbon containing particles X dispersed or dissolved in the liquid, where said carbon containing particles X are present as carbon nanotube particles, graphite particles and/or structural analogue particles of graphite selected from the group consisting of graphene particles, graphene oxide particles, graphite oxide particles, fullerene particles and particles of graphite intercalation compounds and
iii) polymer dissolved in the liquid having a weight average (Mw) molecular weight of at least 250 000 g/mol, where the weight average (Mw) of the molecular weight of the dissolved polymer is determined according to DIN 55672-2: 2016-3, where at least a partial quantity of the polymer contains structural units of a meth acrylate.

2. A liquid printing ink according to claim 1, containing 0.02 - 0.40 wt.% of the carbon containing particles X dispersed or dissolved in the liquid.

3. A liquid printing ink according to claim 1 or 2, where at least 50 wt.% of the particles X dispersed or dissolved in the liquid are present as graphene and/ or graphite particles.

4. A liquid printing ink according to one of the claims 1 - 3, where the liquid contains or consists of organic solvents.

5. A liquid printing ink according to one of the claims 1 - 4, where the liquid contains free radical polymerizable organic solvents.

6. A liquid printing ink according to one of the claims 1 - 5, where the liquid contains less than 0.4 wt.% carbon black, preferably no carbon black.

7. A liquid printing ink according to one of the claims 1 - 6, where the dissolved polymer has a weight average (Mw) molecular weight of 250 000 g/mol to 6 000 000 g/mol, preferably of 400 000 g/mol to 3 000 000 g/mol.

8. A liquid printing ink according to one of the claims 1 - 7, where the concentration of the dissolved polymer is 0.05 to 2 weight%.

9. A liquid printing ink according to one of the claims 1 - 8, where at least 50 wt.% of the dissolved polymer is contributed by structural units of meth acrylates.

10. A liquid printing ink according to one of the claims 1 - 9, where at least 50 wt.% of the dissolved polymer is contributed by a meth acrylate.

11. A liquid printing ink according to one of the claims 1 - 10, where at least 50 wt.% of the dissolved polymer is contributed by methyl meth acrylate.

12. A printing process for printing a substrate by using an ink printing assembly with a movable print head comprising an ink carrier having an ink layer, the ink layer being irradiated regionally in such a way that heat bulges are formed in the ink layer which cause the splitting of ink droplets so that the ink printing assembly is working as nozzleless droplet ejector for ejecting droplets of ink from the ink layer, the distance between the print head and the substrate is adjusted by moving the print head relative to the substrate, wherein the ink layer contains or consists of a liquid printing ink according to one of the claims 1-11.

13. A printing process according to claim 12, where the print distance between the irradiated ink layer region and the corresponding printed substrate region is temporarily or permanently at least 1100 µm.

14. A printing process according to claim 12 or 13, where the ink layer is irradiated regionally by means of a laser, more particularly by means of a switched laser.

15. A printing process according to one of the claims 12 - 14 where the ink carrier and ink layer are moved parallel to one another.

16. A printing assembly comprising an ink layer containing a liquid printing ink as described in one of the claims 1-11.

17. A substrate which is printed with a printing process according to one of the claims 12 - 15.

18. Use of an ink according to one of the claims 1 - 11 or a process according to one of the claims 12 - 15 for printing substrates containing curved surface sections and/ or structured surface areas.
